# EUROPEAN PATENT APPLICATION

(11) **EP 2 610 791 A1**
(43) Date of publication of application: **03.07.2013**
(21) Application number: 12198366.2
(22) Date of filing: 20.12.2012
(51) Int. Cl.: G06Q 10/06

(54) **Apparatus and method for processing project information for cross-platform**

(30) Priority: 02.01.2012 KR 20120000298
(71) Applicant: LSIS Co., Ltd., Dongan-Gu, Anyang Gyeonggi-Do (KR)
(72) Inventor: Lee, Sang Hun, Gyeonggi-do (KR)
(74) Representative: Lang, Johannes

(57) **Abstract**

An apparatus and a method for processing project information for a cross-platform environment in an automation system field are provided. In the apparatus for processing project information according to an embodiment, a web server receives a request signal for project information from a client and transmits projection information corresponding to the request signal. A project server collects heterogeneous data transmitted from an automation system, converts the collected heterogeneous data into data in a predetermined format for transmitting to the client, and outputs the converted data to the client via the web server.

## Description

### CROSS-REFERENCE TO RELATED APPLICATIONS

The present application claims priority under 35 U.S.C. 119 and 35 U.S.C. 365 to Korean Patent Application No. 10-2012-0000298(January 02, 2012), which is hereby incorporated by reference in its entirety.

### BACKGROUND

The present disclosure relates to an apparatus and a method for processing project information for a cross-platform environment in automation system field.

For systems such as a Supervisory Control and Data Acquisition (SCADA) system, a Manufacturing Execution System (MES) and a Post Office Protocol (POP) system, a configuration and Intranet for a field control of a Central Control Room, a monitoring system, a Programmable Logic Controller (PLC) and the like, are constructed.

A field control system, namely, an industrial automation system has various measuring devices such as a motor, a pump, a blower, a power distributor and the like connected with each other.

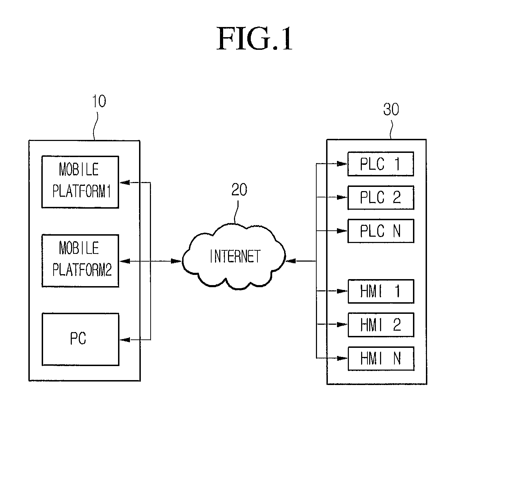

Fig. 1 is a block diagram illustrating a system for providing project information in a cross-platform environment in the related art.

Referring Fig. 1, the system for providing project information includes an application unit 10, an internet 20 and a monitoring unit 30.

The application unit 10 may access a corresponding device through the internet 20 by using a remote address that the application unit 10 knows. The application unit 10 connected to the corresponding device through the internet 20 may read to show project information and tag information stored in the monitoring unit 30 using an individually implemented communication protocol.

In an application environment as the foregoing related art, a PLC system or a Human-Machine Interface (HMI) device connected through the internet may show data in a programming language or in a library that each environment supports through a separate engineering software. In addition, since an automation system in the related art is used in a limited network environment isolated from the outside, a protocol having a low level security is used.

### SUMMARY

Embodiments provide an apparatus and method for processing project information for a cross-platform, which process data provided by an automation system using a general-purpose web-service technique.

Embodiments also provide an apparatus and method for processing project information for a cross-platform, which can provide a security technique for data provided from an automation system and manage data demanding a high level security.

In one embodiment, an apparatus for processing project information includes: a web server receiving a request signal for project information from a client and transmitting the project information corresponding to the request signal; and a project server collecting heterogeneous data transmitted from an automation system, converting the collected heterogeneous data into data in a predetermined format for transmitting to the client, and outputting the converted data to the client via the web server.

The web server may be connected to the client through a Hypertext Transfer Protocol over Secure Sockets Layer (HTTPS) protocol-based communication network.

The project server may include: a project information processing unit receiving data input from the automation system and outputting the project information to which the input data is converted in the predetermined format; a project information converting unit converting the data input from the automation system; and a project information database storing the data converted by the project information unit.

The project information converting unit may convert the data in response to the project information request signal requested via the web server, when converting the data into a predetermined format.

The project information converting unit may convert previously stored data in the project information database or the data input from the automation system at a time point when the project information request signal is input from the client.

The project information database may store data which is received from the automation system and divided in logical units.

The divided unit may be a rung unit when the data received from the automation system is Programmable Logic Controller (PLC) data.

The divided unit may be a display screen unit when the data received from the automation system is Human-Machine Interface (HMI) data.

In another embodiment, a method for processing project information includes: receiving a request signal for project information from a client; retrieving the project information corresponding to the request signal; converting the retrieved project information into information in a predetermined format; and transmitting the converted information to the client.

The converted information may be transmitted to the client through a Hypertext Transfer Protocol over Secure Sockets Layer (HTTPS) protocol-based communication.

The converting of the retrieved project information may convert the data in rung units when the received data is Programmable Logic Controller (PLC) data.

The converting of the retrieved project information may convert the data in display screen units when the received data Human-Machine Interface (HMI) data.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram illustrating a system for providing project information in a cross-platform environment in the related art.

Fig. 2 is a block diagram illustrating a system for processing project information in a cross-platform environment according to an embodiment.

Fig. 3 is a flow chart illustrating an operation for processing project information in a cross-platform environment according to an embodiment.

### DETAILED DESCRIPTION OF THE EMBODIMENTS

Reference will now be made in detail to the embodiments of the present disclosure, examples of which are illustrated in the accompanying drawings.

Terms and words used in the embodiments and claims should not be limitedly construed as those commonly used or defined in dictionaries, but should be construed as meanings and concepts which comply with the spirit of the embodiments of the present disclosure on the basis of a principle that the concepts of the terms can be properly defined to describe the embodiments in the best way.

An apparatus and a method for processing project information in a cross-platform environment according to an embodiment will be described in detail with reference to the accompanying drawings. The invention may, however, be embodied in many different forms and should not be construed as being limited to the embodiments set forth herein; rather, that alternate embodiments included in other retrogressive inventions or falling within the spirit and scope of the present disclosure can easily be derived through adding, altering, and changing, and will fully convey the concept of the invention to those skilled in the art.

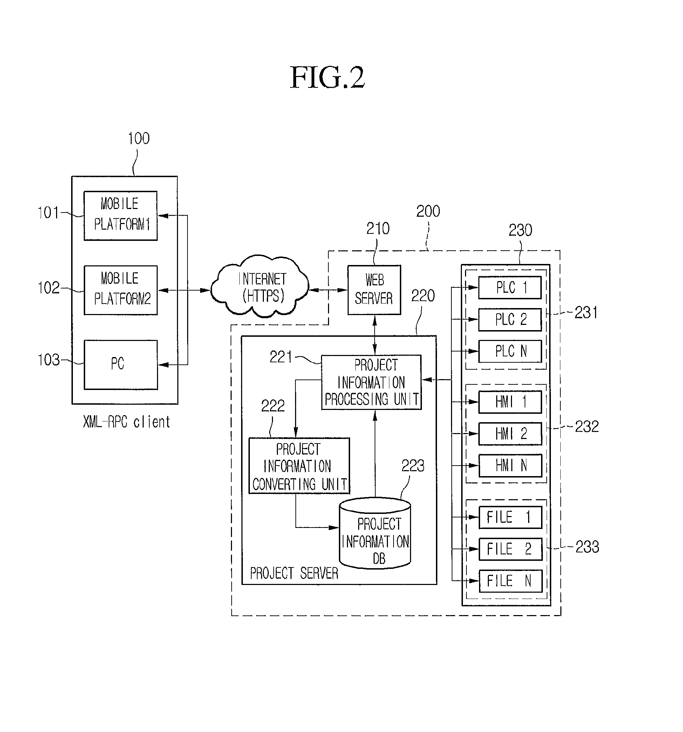

Fig. 2 is a block diagram illustrating a system for processing project information in a cross-platform environment according to an embodiment.

Referring to Fig. 2, a system for processing project information in a cross-platform environment according to an embodiment includes an XML-Remote Procedure Call (RPC) client 100 and a server 200.

The XML-RPC client 100 receives acquired project information from the server 200 and includes at least any one of a mobile platform 101 and 102, and a Personal Computer (PC) 103.

The XML-RPC client 100 including the mobile platform 101 and 102 or the PC 103 may use an XML-RPC communication scheme with the server 200 located remotely.

The XML-RPC communication is an XML-based distributed communication scheme in which the XML-RPC client 100 requests project information to the server 200 through Hypertext Transfer Protocol over Secure Socket Layer (HTTP over SSL, HTTPS) and receives the project information corresponding to the request. In addition, the XML-RPC client 100 can operate in a synchronous operating system. The XML-RPC client 100 requests project information to the server 200 and stops the operation temporarily until receiving the project information corresponding to the request.

The server 200 includes a web server 210, a project server 220 and an automation system source providing unit 230.

The web server 210 connects the XML-RPC client 100 to the server 200 through a HTTPS protocol-based communication network. The web server 210 receives a project information request signal from the XML-RPC client 100 and transmits the project information in response to the request signal to the XML-RPC client 100.

The project server 200 may include a project information processing unit 221, a project information converting unit 222 and a projection information database 223.

The project information processing unit 221 receives the project information request signal through the web server 210 and outputs the project information in response to the request signal to the web server 210. The project information has a predetermined format which is converted to and capable of communicating.

The project information converting unit 222 may convert data received from the heterogeneous automation system source providing unit 230 into communication-based project information through predetermined logic and scheme so that the XML-RPC client 100 can recognize the same as a specific signal.

The project information converting unit 222 may form the project information by dividing the data received from the automation system source providing unit 230 into the minimum units so that the XML-RPC client 100 can deal with and by adding a table including information of the data.

When the project information request signal occurs with respect to the data received from the automation system source providing unit 230, the project information converting unit 222 may perform conversion of the information on the data. Alternatively whenever receiving the data from the automation system source providing unit 230, the project information converting unit 222 may convert to store the data in the project information database 223.

The project information database 223 may store the automation system data received from the automation system source providing unit 230 or the project information converted by the project information converting unit 222. The automation system data may be divided into logical units and stored as the project information. A project information table including the divided data may be stored.

At least one piece of the data included in the project information may be a single rung which is the minimum unit for executing a program when the automation system data is PLC data, or may be a display screen unit when the automation system data is HMI data.

The automation system source providing unit 230 may store monitoring data received from an automation system. The data stored in the automation system source providing unit 230 may be PLC data 231, HMI data 232 or user input data 233.

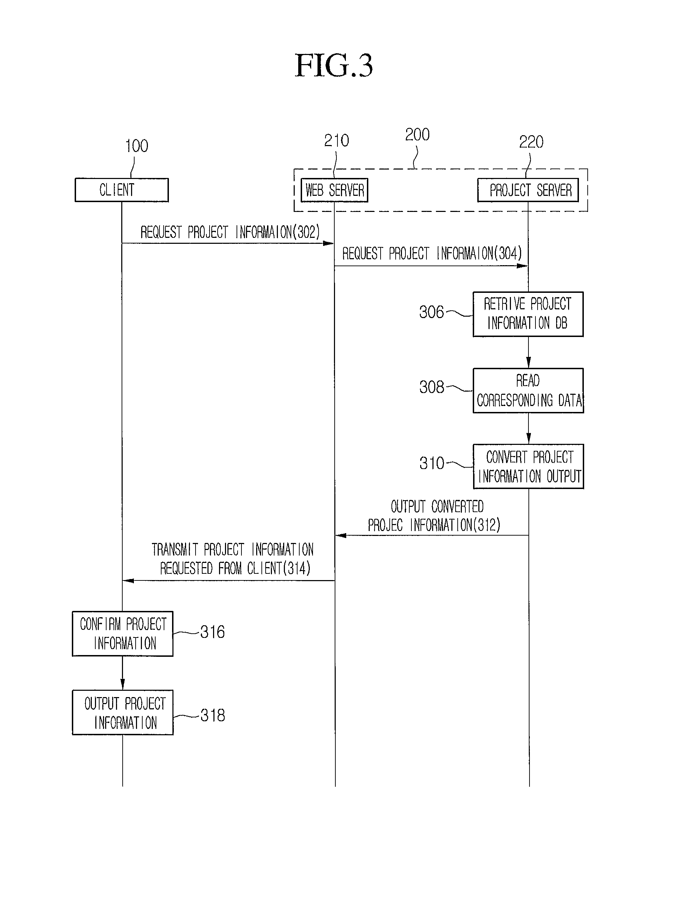

Fig. 3 is a flow chart illustrating an operation for processing project information in a cross-platform environment according to an embodiment.

Referring Fig. 3, the client 100 transmits a project information request signal to server 200 in operation S302. The information request signal may be transmitted through an HTTPS communication network as described above.

The server 200 receives the project information request signal from the client 100 and transmits corresponding information to the project server 220 in operation S304.

The project server 220 retrieves the project information corresponding to the project information request signal from the project information database 223 according to the project information request signal received from the client 100 via the web server 210 in operation S306.

When the requested project information does not exist in the project information database 223, the project server 220 reads data input from the automation system source providing unit 230 in operation S308.

The project server 220 performs a predetermined conversion on the read data into the project information in response to project information request signal received from the client 100 in operation S310.

The project server 220 may output the converted project information to the web server 210.

The web server 210 may transmits the project information to the client 100.

The client 100 confirms the project information received from the server 200 in operation S316 and outputs the same to the mobile platform or the PC which requests the project information in operation S318.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An apparatus for processing project information comprising:
a web server receiving a request signal for project information from a client and transmitting the project information corresponding to the request signal; and
a project server collecting heterogeneous data transmitted from an automation system, converting the collected heterogeneous data into data in a predetermined format for transmitting to the client, and outputting the converted data to the client via the web server.

2. The apparatus according to claim 1, wherein the web server is connected to the client through a Hypertext Transfer Protocol over Secure Sockets Layer (HTTPS) protocol-based communication network.

3. The apparatus according to claim 1, the project server comprising:
a project information processing unit receiving data input from the automation system and outputting the project information to which the input data is converted in the predetermined format;
a project information converting unit converting the data input from the automation system; and
a project information database storing the data converted by the project information unit.

4. The apparatus according to claim 3, wherein, when converting the data into a predetermined format, the product information converting unit converts the data in response to the project information request signal requested via the web server.

5. The apparatus according to claim 4, wherein the project information converting unit converts previously stored data in the project information database or the data input from the automation system at a time point when the project information request signal is input from the client.

6. The apparatus according to claim 3, wherein the project information database stores data which is received from the automation system and divided into logical units.

7. The apparatus according to claim 6, wherein the divided unit is a rung unit when the data received from the automation system is Programmable Logic Controller (PLC) data.

8. The apparatus according to claim 6, wherein the divided unit is a display screen unit when the data received from the automation system is Human-Machine Interface (HMI) data.

9. A method for processing project information comprising:
receiving a request signal for project information from a client;
retrieving the project information corresponding to the request signal;
converting the retrieved project information into information in a predetermined format; and
transmitting the converted information to the client.

10. The method according to claim 9, wherein the converted information is transmitted to the client through a Hypertext Transfer Protocol over Secure Sockets Layer (HTTPS) protocol-based communication.

11. The method according to claim 9, wherein the converting of the retrieved project information converts the data into rung units when the received data is Programmable Logic Controller (PLC) data.

12. The method according to claim 9, wherein the converting of the retrieved project information converts the data into display screen units when the received data Human-Machine Interface (HMI) data.
